# EUROPEAN PATENT APPLICATION

(11) **EP 4 697 491 A1**
(43) Date of publication of application: **18.02.2026**
(21) Application number: 24788522.1
(22) Date of filing: 18.03.2024
(51) Int. Cl.: H01M 50/593, H01M 50/56, H01M 50/107, H01M 50/152, H01M 50/533, H01M 50/536, H01M 50/545, H01M 50/548, H01M 50/586

(54) **BATTERY**

(30) Priority: 14.04.2023 JP 2023066467
(71) Applicant: Panasonic Intellectual Property Management Co., Ltd., Kadoma-shi, Osaka 571-0057 (JP)
(72) Inventor: OKIMOTO, Ryota, Osaka 571-0057 (JP); KAWAGUCHI, Takashi, Osaka 571-0057 (JP); KAWANISHI, Yuta, Osaka 571-0057 (JP)
(74) Representative: Eisenführ Speiser
(86) International application number: PCT/JP2024/010494
(87) International publication number: WO 2024/214492

(57) **Abstract**

A disclosed battery 10 includes: a wound electrode group 11 including a first electrode 11a and a second electrode 11b each having a band shape; a case 12 housing the electrode group 11 and having a bottomed cylindrical shape with an opening at one end; a sealing body 13 sealing the opening; a first current collector plate 15 electrically connected to the case 12 and electrically connected to the first electrode 11a; a second current collector plate 16 including a first weld portion 16a connected by welding to the sealing body 13 and a second weld portion 16b connected by welding to the second electrode 11b; and an insulating plate 17 electrically insulating the case 12 and the second current collector plate 16 from each other. The insulating plate 17 includes a support portion 17a that is located on the side opposite the sealing body with respect to the first weld portion 16a and that supports the first weld portion 16a to restrict displacement of the first weld portion 16a in a direction away from the sealing body 13. Thus, a battery having the end face current collecting configuration can be stably manufactured.

## Description

### [Technical Field]

The present disclosure relates to a battery.

### [Background Art]

Conventional batteries (e.g., see Patent Literature 1) are known that have a configuration (hereinafter, also referred to as a lead connection configuration) in which an electrode group and a current collector plate are connected by a lead. The battery of Patent Literature 1 includes: a wound electrode group including a positive electrode and a negative electrode; a bottomed cylindrical case housing the electrode group and having an opening at one end; and a sealing body sealing the opening of the case, wherein the sealing body includes a positive electrode current collector plate electrically connected to the positive electrode via a positive electrode lead.

### [Citation List]

### [Patent Literature]

[Patent Literature 1] International Publication No. 2022/270432

### [Summary of Invention]

### [Technical Problem]

In recent years, development has been promoted of a configuration (hereinafter, also referred to as an end face current collecting configuration) in which an end face of an electrode group and a current collector plate are directly connected as a configuration more effective in reduction in battery resistance than the lead connection configuration. However, a battery having an end face current collecting configuration suffers from a problem in which sputtering occurs in welding the respective members for ensuring conductive paths, which makes it difficult to stably manufacture the battery. Under such circumstances, the present disclosure has its object of stably manufacturing a battery having an end face current collecting configuration.

### [Solution to Problem]

One aspect of the present disclosure relates to a battery. The battery includes: a wound electrode group including a first electrode and a second electrode each having a band shape; a case housing the electrode group and having a bottomed cylindrical shape with an opening at one end; a sealing body sealing the opening; a first current collector plate electrically connected to the case and electrically connected to the first electrode; a second current collector plate including a first weld portion connected by welding to the sealing body and a second weld portion connected by welding to the second electrode; and an insulating plate electrically insulating the case and the second current collector plate from each other, wherein the insulating plate includes a support portion that is located on a side opposite the sealing body with respect to the first weld portion and that supports the first weld portion to restrict displacement of the first weld portion in a direction away from the sealing body.

### [Advantageous Effects of Invention]

According to the present disclosure, a battery having an end face current collecting configuration can be stably manufactured.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an example of a battery according to the present disclosure.
[FIG. 2] FIG. 2 is a schematic plan view of an example of a positive electrode current collector plate.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A battery according to the present disclosure may be a primary battery such as a lithium primary battery or may be a secondary battery such as an alkaline storage battery (e.g., a nickel-metal hydride battery or a nickel-cadmium battery), a lithium-ion secondary battery, or a lithium-metal secondary battery. The term "battery" in the present disclosure encompasses power storage devices (e.g., a lithium-ion capacitor and an electric double-layer capacitor) in which at least one of a positive electrode and a negative electrode is a polarizable electrode that exhibits capacity by the non-Faraday reaction. The battery according to the present disclosure includes an electrode group, a case, a sealing body, a first current collector plate, a second current collector plate, and an insulating plate.

The electrode group is a wound electrode group including a first electrode and a second electrode each having a band shape (or an elongated sheet shape). The electrode group may be configured by winding the first electrode and the second electrode with a band-shaped separator therebetween, for example. The outer shape of the electrode group may be, for example, cylindrical or prismatic. One of the first electrode and the second electrode is the positive electrode, while the other of the first electrode and the second electrode is the negative electrode.

The first electrode may include a band-shaped first current collector and a first active material layer carried on the first current collector. The second electrode may include a band-shaped second current collector and a second active material layer carried on the second current collector. The separator may be formed of a porous sheet having ionic permeability and insulating properties. Examples of the porous sheet include woven fabrics, nonwoven fabrics, and thin films having micropores.

When a lithium-ion secondary battery is used as an example, the first active material layer may be provided on both sides of the first current collector or may be provided on one side of the first current collector. When the first electrode is the positive electrode, the first current collector is a positive electrode current collector (which can be composed of an aluminum foil or an aluminum alloy foil), and the first active material layer is a positive electrode active material layer (which can contain a lithium-containing transition metal oxide, for example). When the first electrode is the negative electrode, the first current collector is a negative electrode current collector (which can be composed of a copper foil or a copper alloy foil), and a negative electrode active material layer (which can contain a carbonaceous material, for example) may be provided as the first active material layer.

The case is formed into a bottomed cylindrical shape having an opening at one end and houses the electrode group. The case may be made of a metal (e.g., aluminum or an aluminum alloy). The outer shape of the case may correspond to the outer shape of the electrode group, or may be, for example, a bottomed cylindrical shape or a bottomed prismatic shape.

The sealing body seals the opening of the case. The sealing body may be made of a metal (e.g., aluminum or an aluminum alloy). At least a part of the sealing body may be exposed to the outside. The sealing body may be formed into a disc shape as a whole, and its outer peripheral edge may be crimped and fixed to the case via a gasket.

The first current collector plate is electrically connected to the case and electrically connected to the first electrode. Accordingly, the case is electrically connected to the first electrode to function as one of external terminals of the battery. The first current collector plate may be connected to the first electrode, for example, by welding. The first current collector plate may be connected to the case directly or via a connecting member and may be connected to the case by welding.

The second current collector plate includes a first weld portion connected by welding to the sealing body and a second weld portion connected by welding to the second electrode. Accordingly, the sealing body is electrically connected to the second electrode to function as the other external terminal of the battery. The second current collector plate may be connected to the second electrode, for example, by laser welding. The second current collector plate may be connected to the sealing body, for example, by laser welding. As described above, the battery according to the present disclosure has an end face current collecting configuration in which the second current collector plate is directly connected to the second electrode. Therefore, the battery according to the present disclosure can exhibit reduced internal resistance and excellent fast-charge performance.

The insulating plate electrically insulates the second current collector plate and the case from each other. The insulating plate may be provided between the case and the second current collector plate. The insulating plate may be made of a resin material having insulating properties. The insulating plate may be formed into a generally ring shape as a whole.

As described above, the second current collector plate is connected by welding to the sealing body at the first weld portion. Here, if a gap is formed between the sealing body and the first weld portion of the second current collector plate in connecting these by welding, a liquid electrolyte penetrates into the gap, which causes the occurrence of sputtering.

In view of the foregoing, the insulating plate includes a support portion located on the side opposite the sealing body with respect to the first weld portion of the second current collector plate. The support portion supports the first weld portion to restrict displacement of the first weld portion in a direction away from the sealing body. The above configuration makes it difficult to create a gap between the first weld portion and the sealing body, and a liquid electrolyte hardly penetrates into the gap between them. Since the liquid electrolyte is less likely to penetrate between the first weld portion and the sealing body, sputtering is less likely to occur in connection by welding them together, and the battery according to the present disclosure, that is, the battery having an end face current collecting configuration can be stably manufactured.

An end portion of the second electrode along the long-side direction (or an end portion of the band-shaped second electrode in the short-side direction) may protrude from one end surface of the electrode group. It is possible that the second weld portion is provided on the side toward the electrode group relative to the first weld portion and welded to the end portion of the second electrode. In the above configuration, the second current collector plate is connected by welding to the second electrode at the second weld portion. The second weld portion may extend in the radial direction of the second current collector plate.

The first weld portion and the second weld portion may be integrally formed with each other. This can reduce the number of components of the battery and improve the productivity of the battery.

The first weld portion may be composed of a folded portion that rises from the central end of the second weld portion toward the sealing body and is folded back toward the outer peripheral side. The support portion may be provided between the first weld portion and the second weld portion in the axial direction of the electrode group.

The first weld portion and the second weld portion may be arranged to be displaced from each other in the circumferential direction of the case. According to this configuration, interference with the laser irradiation by the first weld portion can be avoided in connecting the second current collector plate and the second electrode at the second weld portion by laser welding.

The support portion may support an outer part of the first weld portion in the radial direction of the case. In this configuration, the support portion can more effectively restrict the displacement of the first weld portion in a direction away from the sealing plate. This effect is particularly pronounced when the first weld portion is composed of a folded portion. In addition, when the first weld portion is composed of the folded portion as described above, the support portion can serve as a protective wall that prevents sputter from scattering even when sputtering occurs in welding the first weld portion. The outer part of the first weld portion in the radial direction of the case refers to an outer 30% region of a region of the first weld portion extending in the radial direction. The extending region of the first weld portion is, for example, a region of the first current collector plate that is in contact with the sealing body, and a part of the extending region is welded to the sealing plate. When the first weld portion is composed of the folded portion, the tip end of the folded portion is the outermost end of the extending region.

As described above, according to the present disclosure, the support portion restricts the displacement of the first weld portion in a direction away from the sealing body, which makes it possible to suppress the occurrence of sputtering and stably manufacture a battery having the end face current collecting configuration.

Hereinafter, examples of the battery according to the present disclosure will be specifically described with reference to the drawings. The elements of configuration described above are applicable to elements of configuration of the exemplary batteries described below. The elements of configuration of the exemplary batteries described below can be altered based on the above description. Further, the matters described below may be applied to the above-described embodiment. Among the elements of configuration of the exemplary batteries described below, an element of configuration that is not essential to the battery according to the present disclosure may be omitted. It should be noted that the drawings indicated below are schematic and do not accurately reflect the shape or number of actual members.

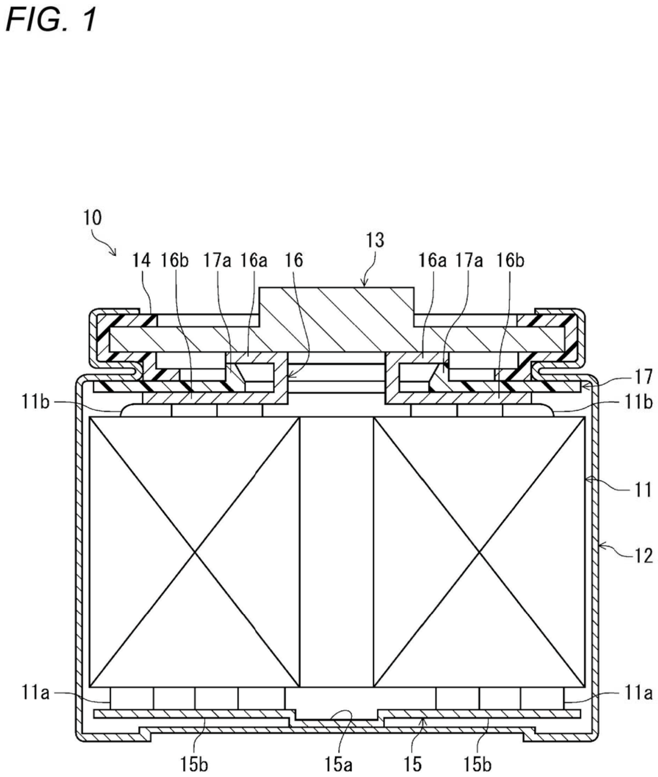

A battery 10 of the present embodiment is a secondary battery capable of repeated charging and discharging, and may be, for example, a lithium-ion secondary battery or a lithium secondary battery (lithium-metal secondary battery). As illustrated in FIG. 1, the battery 10 includes an electrode group 11, a case 12, a sealing body 13, a negative electrode current collector plate 15, a positive electrode current collector plate 16, and an insulating plate 17.

The electrode group 11 is a wound electrode group including a negative electrode 11a and a positive electrode 11b each having a band shape. The electrode group 11 is formed by winding the negative electrode 11a and the positive electrode 11b with a band-shaped separator (not illustrated) therebetween. From one end face (upper end face in FIG. 1) of the electrode group 11, an end portion of the positive electrode 11b along the long-side direction is exposed. From the other end face (lower end face in FIG. 1) of the electrode group 11, an end portion of the negative electrode 11a along the long-side direction is exposed. The negative electrode 11a is an example of the first electrode, and the positive electrode 11b is an example of the second electrode.

The case 12 is formed in a bottomed cylindrical shape having an opening at one end (upper end in FIG. 1) and houses the electrode group 11. The case 12 is made of metal.

The sealing body 13 seals the opening of the case 12. The sealing body 13 is made of metal and is formed in a disk shape as a whole. The outer peripheral edge of the sealing body 13 is crimped and fixed to the case 12 via a gasket 14 having insulating properties.

The negative electrode current collector plate 15 includes a third weld portion 15a welded to the inner bottom surface of the case 12, and a fourth weld portion 15b integrally formed with the third weld portion 15aand welded to the exposed end portion of the negative electrode 11a. The fourth weld portion 15b is provided on the side toward the electrode group 11 (upper side in FIG. 1) relative to the third weld portion15a. The negative electrode current collector plate 15 is connected to the negative electrode 11a at the fourth weld portion 15b by laser welding and connected to the case 12 at the third weld portion 15a by laser welding. Accordingly, the case 12 is electrically connected to the negative electrode 11a to function as a negative electrode external terminal of the battery 10. The negative electrode current collector plate 15 is an example of the first current collector plate.

The positive electrode current collector plate 16 includes a first weld portion 16a welded to the sealing body 13, and a second weld portion 16b integrally formed with the first weld portion 16aand welded to the exposed end portion of the positive electrode 11b. The second weld portion 16b is provided on the side toward the electrode group 11 (lower side in FIG. 1) relative to the first weld portion 16a. The positive electrode current collector plate 16 is connected to the positive electrode 11b at the second weld portion 16b by laser welding and connected to the sealing body 13 at the first weld portion 16a by laser welding. Accordingly, the sealing body 13 is electrically connected to the positive electrode 11b to function as a positive electrode external terminal of the battery 10. The positive electrode current collector plate 16 is an example of the second current collector plate.

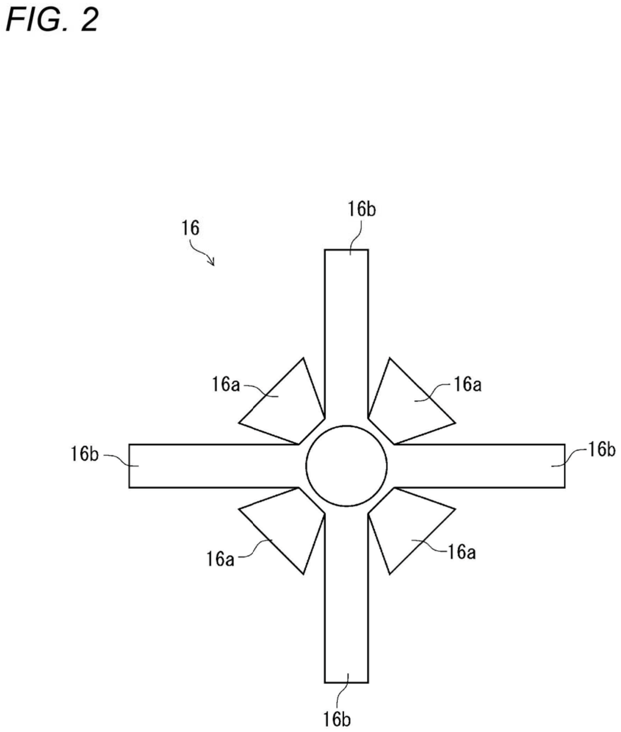

As illustrated in FIGS. 1 and 2, the first weld portion 16a is composed of a folded portion that rises from the center of the second weld portion 16b toward the sealing body 13 and folded back toward the outer peripheral side. Further, the first weld portion 16a and the second weld portion 16b are arranged to be displaced from each other in the circumferential direction of the case 12. In this example, four first weld portions 16a are arranged at 90° intervals and four second weld portions 16b are arranged at 90° intervals in such a manner as to be positioned between adjacent first weld portions 16a. However, the numbers and arrangements of the first weld portions 16a and the second weld portions 16b are not limited thereto. Each second weld portion 16b may have a region located radially outward of each first weld portion 16a. In FIG. 1, the first weld portion 16a and the second weld portion 16b are indicated in the same cross section for the sake of convenience.

The insulating plate 17 is located between the case 12 and the positive electrode current collector plate 16 to insulate them from each other. The insulating plate 17 is formed of a resin material having insulating properties and has a generally ring shape as a whole. The insulating plate 17 includes a support portion 17a located on the side opposite the sealing body 13 with respect to the first weld portion 16a of the positive electrode current collector plate 16. The shape of the insulating plate 17 may be a shape including a ring-shaped cylindrical portion and a flanged portion extending in the radial direction from one end of the cylindrical portion (an end on the side of the electrode group 11). In this case, the ring-shaped cylindrical portion forms the support portion 17a. The support portion 17a is located between the first weld portion 16a and the second weld portion 16b in the axial direction (vertical direction in FIG. 1) of the electrode group 11 and supports the first weld portion 16a to restrict displacement of the first weld portion 16a in a direction away from the sealing body 13. The support port17a supports the outer part of the first weld portion 16a in the radial direction of the case 12. The support portion 17a in the present embodiment has a tapered inner peripheral surface that increases in diameter toward the sealing body 13, but the shape of the support portion 17a is not particularly limited.

### <<Supplemental Remarks>>

According to the above description of the embodiments, the following techniques are disclosed.

### (Technique 1)

A battery including:
a wound electrode group including a first electrode and a second electrode each having a band shape;
a case housing the electrode group and having a bottomed cylindrical shape with an opening at one end;
a sealing body sealing the opening;
a first current collector plate electrically connected to the case and electrically connected to the first electrode;
a second current collector plate including a first weld portion connected by welding to the sealing body and a second weld portion connected by welding to the second electrode; and
an insulating plate electrically insulating the case and the second current collector plate from each other,
wherein the insulating plate includes a support portion that is located on a side opposite the sealing body with respect to the first weld portion and that supports the first weld portion to restrict displacement of the first weld portion in a direction away from the sealing body.

### (Technique 2)

The battery according to Technique 1, wherein an end portion of the second electrode along a long-side direction protrudes from one end surface of the electrode group, and
the second weld portion is located on a side toward the electrode group relative to the first weld portion and welded to the end portion of the second electrode.

### (Technique 3)

The battery according to Technique 2, wherein the first weld portion and the second weld portion are integrally formed with each other.

### (Technique 4)

The battery according to Technique 3, wherein the first weld portion is composed of a folded portion that rises from a central end of the second weld portion toward the sealing body and that is folded back toward an outer peripheral side, and
the support portion is located between the first weld portion and the second weld portion in an axial direction of the electrode group.

### (Technique 5)

The battery according to Technique 3 or 4, wherein the first weld portion and the second weld portion are arranged to be displaced from each other in a circumferential direction of the case.

### (Technique 6)

The battery according to any one of Techniques 1 to 5, wherein the support portion supports an outer part of the first weld portion in a radial direction of the case.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be utilized for batteries.

### [Reference Signs List]

10: battery
11: electrode group
   11a: negative electrode (first electrode)
   11b: positive electrode (second electrode)
12: case
13: sealing body
14: gasket
15: negative electrode current collector plate (first current collector plate)
   15a: third weld portion
   15b: fourth weld portion
16: positive electrode current collector plate (second current collector plate)
   16a: first weld portion
   16b: second weld portion
17: insulating plate
   17a: support portion

## Claims

1. A battery comprising:
a wound electrode group including a first electrode and a second electrode each having a band shape;
a case housing the electrode group and having a bottomed cylindrical shape with an opening at one end;
a sealing body sealing the opening;
a first current collector plate electrically connected to the case and electrically connected to the first electrode;
a second current collector plate including a first weld portion connected by welding to the sealing body and a second weld portion connected by welding to the second electrode; and
an insulating plate electrically insulating the case and the second current collector plate from each other,
wherein the insulating plate includes a support portion that is located on a side opposite the sealing body with respect to the first weld portion and that supports the first weld portion to restrict displacement of the first weld portion in a direction away from the sealing body.

2. The battery according to claim 1,
wherein an end portion of the second electrode along a long-side direction protrudes from one end surface of the electrode group, and
the second weld portion is located on a side toward the electrode group relative to the first weld portion and welded to the end portion of the second electrode.

3. The battery according to claim 2,
wherein the first weld portion and the second weld portion are integrally formed with each other.

4. The battery according to claim 3,
wherein the first weld portion is composed of a folded portion that rises from a central end of the second weld portion toward the sealing body and that is folded back toward an outer peripheral side, and
the support portion is located between the first weld portion and the second weld portion in an axial direction of the electrode group.

5. The battery according to claim 3 or 4,
wherein the first weld portion and the second weld portion are arranged to be displaced from each other in a circumferential direction of the case.

6. The battery according to any of claims 1 to 4,
wherein the support portion supports an outer part of the first weld portion in a radial direction of the case.
